Europäisches Patentamt

**(19)** European Patent Office

Office européen des brevets

**(11)** EP 0 622 340 B1

**(12)** EUROPEAN PATENT SPECIFICATION

**(45)** Date of publication and mention of the grant of the patent:
**04.12.1996 Bulletin 1996/49**

**(51)** Int. Cl.[6]: **C03B 9/14**, C03B 37/014, C03C 17/02, C03B 8/04

**(21)** Application number: **94400841.6**

**(22)** Date of filing: **18.04.1994**

**(54) Improvement in the method for the preparation of a synthetic silica glass body**

Verfahrensverbesserung zur Herstellung eines synthetischen Quarzglaskörpers

Amélioration au procédé pour la préparation d'un objet en verre de silice synthétique

**(84)** Designated Contracting States:
**DE FR GB**

**(30)** Priority: **27.04.1993 JP 100808/93**

**(43)** Date of publication of application:
**02.11.1994 Bulletin 1994/44**

**(73)** Proprietors:
- **SHIN-ETSU CHEMICAL CO., LTD.**
  **Chiyoda-ku Tokyo (JP)**
- **Shin-Etsu Quartz Co.,Ltd.**
  **Shinjuku-ku, Tokyo (JP)**

**(72)** Inventors:
- **Ohtsuka, Hisatoshi**
  **Joetsu-shi, Niigata-ken (JP)**
- **Takita, Masatoshi**
  **Joetsu-shi, Niigata-ken (JP)**
- **Fujinoki, Akira**
  **Kooriyama-shi, Fukushima-ken (JP)**

**(74)** Representative: **Armengaud Ainé, Alain et al**
**Cabinet ARMENGAUD AINE**
**3 Avenue Bugeaud**
**75116 Paris (FR)**

**(56)** References cited:
**GB-A- 2 054 553**

## Description

BACKGROUND OF THE INVENTION

The present invention relates to a method for the preparation of a synthetic silica glass body or, more particularly, relates to an improvement in the method for the preparation of a synthetic silica glass body by the flame hydrolysis of a volatile silicon-containing compound in an oxyhydrogen flame blown at the surface of a refractory substrate so as to deposit the fine silica particles produced by the flame hydrolysis of the silicon compound on the substrate surface with simultaneous fusion of the silica particle deposit into a transparent silica glass body which is imparted with improved stability in the optical properties against irradiation of ultraviolet light from excimer lasers and the like.

As is well known, one of the methods for the preparation of a synthetic silica glass body is a so-called direct flame hydrolysis method in which vapor of a volatile silicon-containing compound such as silicon tetrachloride, alkoxy silane compounds and the like is subjected to combustion or vapor-phase hydrolysis in an oxyhydrogen flame to form fine particles of silicon dioxide or silica which are blown at and deposited on the surface of a substrate of silica glass with simultaneous *in situ* sintering and vitrification into a transparent synthetic silica glass body by the heat of combustion of the combustible silicon compound and the heat of the oxyhydrogen flame blown at the substrate surface.

The synthetic silica glass bodies prepared in the above described direct flame hydrolysis method are widely used as a base material of various parts of optical instruments such as lenses, prisms and the like by virtue of the high transmissivity to ultraviolet light and other excellent and desirable optical properties. Synthetic silica glass, however, can never be satisfactory in all respects as a material of optical parts. When a lens made from such a synthetic silica glass body is prolongedly used in an optical system for ultraviolet light of which the light source is an excimer laser, for example, certain optical properties of the lens, such as transmissivity to light, refractive index, appearance of luminescent emission and the like, are subject to variation or changes not to ensure stability of the optical system. Many investigations have already been undertaken for the mechanism of this disadvantageous phenomenon in the optical properties of the synthetic silica glass and it is now understood that the instability of synthetic silica glass against ultraviolet light is closely correlated to the contents of certain chemical constituents in the glass such as, in particular, hydroxyl groups and hydrogen in the molecular form as well as chlorine when a chlorine-containing silicon compound is used as the starting material.

Although it is also understood that the types of the starting compounds and the conditions of the process are the determinant factors of the contents of the hydroxyl groups, molecular hydrogen and chlorine atoms in the synthetic silica glass body, no detailed analysis has been heretofore undertaken for the correlation between the contents of these chemical constituents and the chemical nature of the starting compounds and/or the process parameters. For example, Japanese Patent Kokai No. 4-21540 teaches that, in the preparation of a synthetic silica glass body by the flame hydrolysis of silicon tetrachloride, a silica glass body free from emission of luminescence at the wavelengths of 650 nm and 280 nm can be obtained from silicon tetrachloride when the oxyhydrogen flame is formed by introducing hydrogen gas and oxygen gas into the burner in such a proportion of the feed rates that the hydrogen gas is in excess over the stoichiometrically equivalent volume relative to the oxygen gas, in particular, by keeping the volume ratio of $H_2:O_2$ in the range from 2.2 to 2.5 followed by a heat treatment of the thus produced silica glass body at 200 °C to 1200 °C in a non-reducing atmosphere. This reference, however, is silent on the relationship between the process conditions and the chemical constituents such as hydroxyl groups and molecular hydrogen in the silica glass body, in particular, when a combustible silicon compound other than silicon tetrachloride is used. A process for producing high-purity silica glass using glass-forming chlorides, such as $SiCl_4$ or $SiHCl_3$, in an excess of oxygen and by means of a glass burner composed of five coaxial cylinders as individual gas passages is known from GB-A-2 054 553.

SUMMARY OF THE INVENTION

The present invention accordingly has an object to provide a synthetic silica glass body prepared by the direct flame hydrolysis method and having controlled contents of chemical constituents such as hydroxyl groups and molecular hydrogen using an alkoxy silane compound as the starting silicon compound.

Thus, the present invention provides, in a method for the preparation of a synthetic silica glass body in which a silane compound represented by the general formula

$$R_nSi(OR)_{4-n}, \qquad\qquad (I)$$

in which R is an aliphatic monovalent hydrocarbon group and the subscript n is zero or a positive integer not exceeding 4, is flame hydrolyzed in an oxyhydrogen flame formed on a concentrically multitubular burner nozzle consisting of a center nozzle and at least four ring nozzles comprising a first ring nozzle surrounding the center nozzle, a second ring nozzle surrounding the first ring nozzle, a third ring nozzle surrounding the second ring nozzle and a fourth ring nozzle surrounding the third ring nozzle, into which vapor of the silane compound, oxygen gas and hydrogen gas are introduced to form an oxyhydrogen flame and to effect flame hydrolysis of the silane compound in the oxyhydrogen flame, an improvement which comprises:

(a) introducing a gaseous mixture of vapor of the silane compound and oxygen into the center nozzle;
(b) introducing the oxygen gas into at least two ring nozzles including the first ring nozzle; and
(c) introducing the hydrogen gas into at least two ring nozzles including the second ring nozzle,

the total feed rate of the oxygen gas being in the range of at least 50% of but not exceeding 90% of the stoichiometrically equivalent amount required for complete combustion of the hydrogen gas and complete flame hydrolysis of the silane compound.

BRIEF DESCRIPTION OF THE DRAWING

Figure is a plan view of the burner nozzle having a plural number of discrete tubular nozzles to open within a ring nozzle.

Figure 2 is a graph showing the content of hydroxyl groups in the synthetic silica glass prepared in the Example as a function of the stoichiometric oxygen ratio (see below).

Figure 3 is a graph showing the correlation between the content of hydroxyl groups and content of molecular hydrogen in the synthetic silica glass prepared in the Example.

DETAILED DESCRIPTION OF THE PREFERRED EMBODIMENTS

As is described above, the volatile silicon-containing compound as the starting material of the synthetic silica glass body is a silane compound represented by the above given general formula (I). When the subscript n is smaller than 4, the compound is an alkoxy silane compound having at least one alkoxy group in a molecule. In particular, alkyl trialkoxy silane is preferred as exemplified by methyl trimethoxy silane and the like in respect of relatively low boiling point thereof to ensure easy vaporization into the vapor to be introduced into the concentrically multitubular burner nozzle. For example, the alkoxy silane compound is heated at an appropriate temperature in an evaporator and a carrier gas such as oxygen is blown into the heated silane compound so that the vapor of the silane compound is carried by the carrier gas and introduced into the center nozzle of the burner as a gaseous mixture with the carrier gas. The rate of the silane vapor introduction into the burner nozzle can be easily controlled by adjusting the temperature of the silane compound, blowing velocity of the carrier gas and other factors. The vapor of the silane compound as carried by the carrier gas is introduced into the center nozzle of the concentrically multitubular burner nozzle.

Chlorine-containing silane compounds such as silicon tetrachloride are not preferred as the starting vaporizable silicon compound because synthetic silica glass prepared from such a chlorine-containing silane compound is subject to a remarkable decrease in the transmissivity to the ultraviolet light at a wavelength of 193 nm when the glass body is prolongedly irradiated, for example, with a laser beam of 193 nm wavelength from an ArF excimer laser as compared with synthetic silica glass prepared from a silane compound not containing chlorine.

According to the inventive method by using, for example, a pentafold concentrically multitubular burner nozzle consisting of a center nozzle, a first ring nozzle surrounding the center nozzle, a second ring nozzle surrounding the first ring nozzle, a third ring nozzle surrounding the second ring nozzle and a fourth ring nozzle surrounding the third ring nozzle, a gaseous mixture of the silane vapor and oxygen is introduced into the center nozzle while hydrogen gas is introduced into the first and third ring nozzles and oxygen gas is introduced into the second and fifth ring nozzles and it is essential that the feed rate of the oxygen gas is at least a half but lower than the stoichiometrically equivalent rate required for complete combustion and decomposition of the hydrogen gas and the silane vapor. This ratio is referred to as the stoichiometric oxygen ratio hereinafter. This unique process conditions have been established on the unexpected discovery obtained in the experiments that the content of hydroxyl groups and the content of molecular hydrogen in the synthetic silica glass as the determinant factors for the optical properties of the glass are closely correlated with the stoichiometric oxygen ratio. Namely, the content of hydroxyl groups is approximately proportional to the stoichiometric oxygen ratio while the content of the molecular hydrogen is negatively correlated with the content of hydroxyl groups.

The mechanism of the above mentioned unexpectedly discovered phenomenon is presumably as follows. Namely, the stoichiometric oxygen ratio has influences on the deposition of the silica particles, temperature of the melt surface and temperature distribution in the radial direction of the melt surface so that, when the temperature of the melt surface is as high as 2000 °C or higher, a reaction of the equation

$$\equiv Si\text{-}O\text{-}Si\equiv\ \rightarrow\ \equiv Si\text{-}O \cdot\ +\ H_2\ \rightarrow\ \equiv Si\text{-}O\text{-}H\ +\ H\text{-}O\text{-}Si\equiv$$

proceeds resulting in an increase in the content of the hydroxyl groups in the synthetic silica glass so that an increase in the stoichiometric oxygen ratio has an effect of increasing the content of the hydroxyl groups as a consequence of the increase in the temperature of the melt surface due to the enhancement in the combustion efficiency of hydrogen resulting in a decrease in the content of molecular hydrogen in the synthetic silica glass while a decrease in the stoichiometric oxygen ratio has an effect of decreasing the content of hydroxyl groups and increasing the content of molecular hydrogen. It has been established that the balance of the contents of hydroxyl groups and molecular hydrogen in the synthetic silica glass can be optimal when the stoichiometric oxygen ratio is at least 0.5 but lower than 1.0 or, preferably, in the range from 50% to 90% or, preferably, from 50% to 80%. When this requirement is satisfied, good controllability can be obtained for the content of hydroxyl groups in the range from 500 ppm to 1200 ppm by weight and for the content of molecular hydrogen in the range from $1 \times 10^{17}$ to $1 \times 10^{19}$ molecules/cm$^3$ while it is known that excellent stability of synthetic silica glass against ultraviolet irradiation can be obtained when the content of hydroxyl groups is in the range from 500 ppm to 850 ppm by weight and the content of molecular hydrogen is in the range from $4 \times 10^{18}$ to $1 \times 10^{19}$ molecules/cm$^3$. When the starting vaporizable silicon compound is silicon tetrachloride instead of an alkoxy silane compound, the content of molecular hydrogen in the synthetic silica glass can be controlled only within a narrow range of from $1 \times 10^{17}$ to $5 \times 10^{18}$ molecules/cm$^3$.

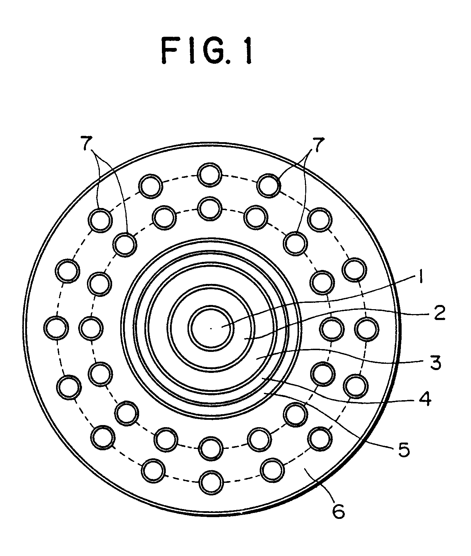

Although the description above is given for the case of using a pentafold concentrically multitubular burner nozzle, the principle of the present invention is applicable also to burner nozzles of different types including, for example, a multitubular burner nozzle disclosed in Japanese Patent Kokai 59-102810, which is a modification of a concentrically multitubular nozzle having, in addition, a plural number of discrete tubular nozzles to open with one of the ring nozzles as is illustrated in Figure 1 showing the arrangement of the respective nozzles consisting of a center nozzle 1, a first to fifth ring nozzles 2 to 6, respectively, and a plurality of discrete small tubular nozzles 7 to open within the fifth ring nozzle 6. In an example by using this composite burner nozzle, vapor of methyl trimethoxy silane is introduced into the center nozzle 1 at a rate of 10 to 28 moles/hour as mixed with oxygen gas at a rate of 1 to 3 Nm$^3$/hour and pure oxygen gas is introduced into the first and third ring nozzles 2 and 4 at rates of 0.1 to 0.5 Nm$^3$/hour and 2 to 6 Nm$^3$/hour and into the discrete small tubular nozzles 7 at a rate of 5 to 15 Nm$^3$/hour as a total. On the other hand, hydrogen gas is introduced into the second, fourth and fifth ring nozzles 3, 5, 6 at rates of 3 to 7 Nm$^3$/hour, 2 to 6 Nm$^3$/hour and 13 to 38 Nm$^3$/hour, respectively. The particular feed rates of the silane compound, oxygen gas and hydrogen gas should be selected respectively to satisfy the requirement that the stoichiometric oxygen ratio is in the range from 50% to 90% or, preferably, from 50% to 80%.

In the following, the procedure for the preparation of a synthetic silica glass body according to the invention is described in detail by way of examples, in which the contents of hydroxyl groups and molecular hydrogen were determined by the respective procedures described below.

Content of hydroxyl groups:

The content of hydroxyl groups was calculated from the intensity of the infrared absorption at a wavelength of 2.7 μm by using an infrared absorption spectrophotometer.

Content of molecular hydrogen:

Determination was performed by the host counting method using a Raman spectrophotometer (Model NR 1100, manufactured by Nippon Bunko Kogyo Co.) at an excitation wavelength of 488 nm with an Ar laser. Namely, the content of molecular hydrogen could be correlated with the area ratio of the peaks in the Raman scattering spectrum between the scattering band by SiO$_2$ observed at a wave number of 800 cm$^{-1}$ and the scattering band by hydrogen molecules observed in a wave number region of 4135 to 4140 cm$^{-1}$. The conversion factor of the intensity ratio to the molecular hydrogen content used here was $I_{(4135 \text{ cm-1})}:I_{(800 \text{ cm-1})} \times 1.22 \times 10^{21}$ given in a Russian journal Zhurnal Prikladnoi Spektroskopii, volume 46, No. 6, pages 987 to 991 (June, 1987).

<u>Example</u>

In each of the eight experiments No. 1 to No. 8, vapor of methyl trimethoxy silane was introduced into the center nozzle of a pentafold concentrically multitubular burner nozzle at a rate of 2500 g per hour together with oxygen gas while oxygen gas is also introduced into the first and third ring nozzles and hydrogen gas was introduced into the second and fourth ring nozzles to form an oxyhydrogen flame on the burner nozzle. The feed rate of hydrogen gas was constant at 40.0 Nm$^3$/hour throughout the experiments but the overall feed rate of oxygen gas was in the range from 9.0 to 34.0 Nm$^3$/hour in each of the eight experiments as is shown in Table 1 below together with the stoichiometric oxygen ratios in the respective experiments.

The vapor of methyl trimethoxy silane was flame-hydrolyzed in the oxyhydrogen flame and the thus produced fine silica particles were deposited on a target of fused silica glass under rotation so as to grow the silica particle deposit with simultaneous fusion into transparent silica glass in a horizontal axial direction until a cylindrical fused silica glass body having a diameter of 130 mm and a length of 1000 mm was obtained.

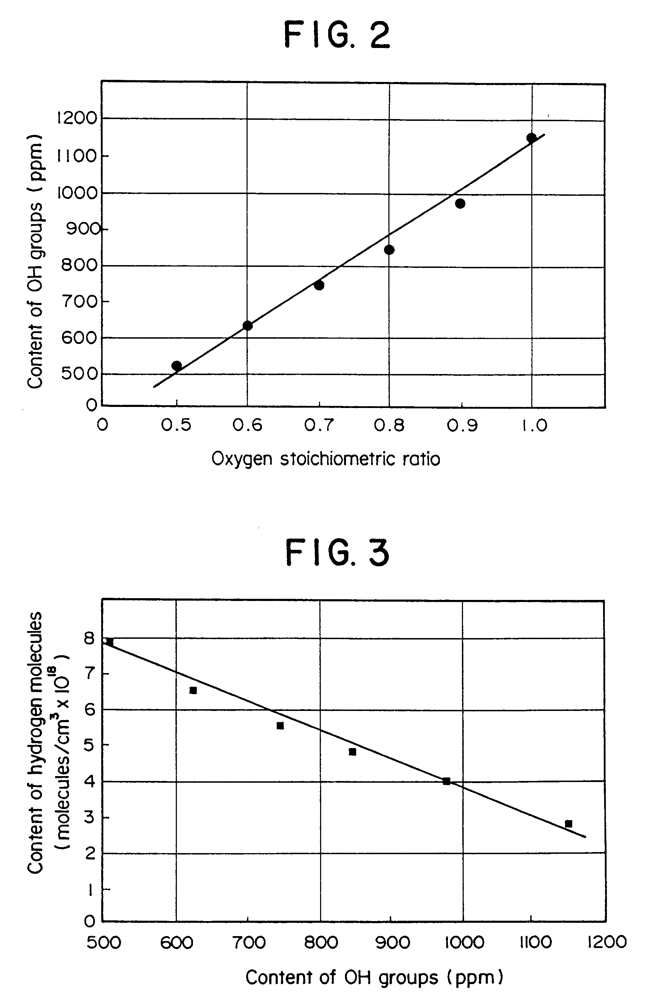

Determinations were made for the contents of hydroxyl groups and molecular hydrogen in these fused silica glass bodies according to the procedure described above to give the results shown in Table 1. Figures 2 and 3 show the relationships between the content of hydroxyl groups and stoichiometric oxygen ratio and between the content of molecular hydrogen and content of hydroxyl groups, respectively.

Table 1

| Experiment No. | Feed rate of oxygen, $Nm^3$/hour | Stoichiometric oxygen ratio | Content of hydroxyl groups, ppm | Content of molecular hydrogen, $\times 10^{18}$ molecules/$cm^3$ |
|---|---|---|---|---|
| 1 | 34.0 | 1.50 | *) | *) |
| 2 | 22.7 | 1.00 | 1150 | 2.8 |
| 3 | 20.4 | 0.90 | 980 | 4.0 |
| 4 | 18.1 | 0.80 | 850 | 4.8 |
| 5 | 15.9 | 0.70 | 750 | 5.5 |
| 6 | 13.6 | 0.60 | 630 | 6.5 |
| 7 | 11.3 | 0.50 | 520 | 7.9 |
| 8 | 9.0 | 0.40 | *) | *) |
| *) not determined due to instability of growth | | | | |

## Claims

1. A method for the preparation of a synthetic silica glass body in which a silane compound represented by the general formula

$$R_nSi(OR)_{4-n},$$

in which R is an aliphatic monovalent hydrocarbon group and the subscript n is zero or a positive integer not exceeding 4, is flame hydrolyzed in an oxyhydrogen flame formed on a concentrically multitubular burner nozzle consisting of a center nozzle and at least four ring nozzles comprising a first ring nozzle surrounding the center nozzle, a second ring nozzle surrounding the first ring nozzle, a third ring nozzle surrounding the second ring nozzle and a fourth ring nozzle surrounding the third ring nozzle, into which vapor of the silane compound, oxygen gas and hydrogen gas are introduced to form an oxyhydrogen flame and to effect flame hydrolysis of the silane compound in the oxyhydrogen flame, an improvement which comprises:

(a) introducing a gaseous mixture of vapor of the silane compound and oxygen into the center nozzle;
(b) introducing the oxygen gas into at least two ring nozzles including the first ring nozzle; and
(c) introducing the hydrogen gas into at least two ring nozzles including the second ring nozzle,

the total feed rate of the oxygen gas being in the range of at least 50% of but not exceeding 90% of the stoichiometrically equivalent amount required for complete combustion of the hydrogen gas and complete flame hydrolysis of the silane compound.

2. A method for the preparation of a synthetic silica glass body in which a silane compound represented by the general formula

$$R_nSi(OR)_{4-n},$$

in which R is an aliphatic monovalent hydrocarbon group and the subscript n is zero or a positive integer not exceeding 4, is flame hydrolyzed in an oxyhydrogen flame formed on a generally concentrically multitubular composite burner nozzle consisting of a center nozzle and five ring nozzles including a first ring nozzle surrounding the center nozzle, a second ring nozzle surrounding the first ring nozzle, a third ring nozzle surrounding the second ring nozzle, a fourth ring nozzle surrounding the third ring nozzle and a fifth ring nozzle surrounding the fourth ring nozzle and a plurality of discrete tubular nozzles concentrically arranged to open within the fifth ring nozzle, into which vapor of the silane compound, oxygen gas and hydrogen gas are introduced to form an oxyhydrogen flame and to effect flame hydrolysis of the silane compound in the oxyhydrogen flame, an improvement which comprises:

(a) introducing a gaseous mixture of vapor of the silane compound and oxygen into the center nozzle;
(b) introducing the oxygen gas into the first and the third ring nozzles and into the discrete tubular nozzles ring nozzles; and
(c) introducing the hydrogen gas into the second, fourth and fifth ring nozzles,

the total feed rate of the oxygen gas being in the range of at least 50% of but not exceeding 90% of the stoichiometrically equivalent amount required for complete combustion of the hydrogen gas and complete flame hydrolysis of the silane compound.

## Patentansprüche

1. Verfahren zur Herstellung eines synthetischen Silicaglaskörpers, bei dem eine Silanverbindung der folgenden allgemeinen Formel:

$$R_nSi(OR)_{4-n}$$

worin R eine aliphatische monovalente Kohlenwasserstoffgruppe bedeutet und der Index n für 0 oder eine positive Zahl von nicht mehr als 4 steht,
in einer Knallgasflamme flammenhydrolysiert wird, die aus einer konzentrisch-mehrröhrigen Brennerdüse gebildet wird, die aus einer zentralen Düse und mindestens vier Ringdüsen besteht und eine die zentrale Düse umringende erste Ringdüse, eine die erste Ringdüse umringende zweite Ringdüse, eine die zweite Ringdüse umringende dritte Ringdüse und eine die dritte Ringdüse umringende vierte Ringdüse aufweist, in die Dampf aus der Silanverbindung, Sauerstoffgas und Wasserstoffgas eingeleitet werden, um eine Knallgasflamme zu bilden und die Flammenhydrolyse der Silanverbindung in der Knallgasflamme zu bewirken, wobei die Verbesserung umfaßt:

(a) Einleiten einer Gasmischung aus dem Dampf der Silanverbindung und Sauerstoff in die zentrale Düse,
(b) Einleiten des Sauerstoffgases in mindestens zwei Ringdüsen einschließlich der ersten Ringdüse und
(c) Einleiten des Wasserstoffgases in mindestens zwei Ringdüsen einschließlich der zweiten Ringdüse,

wobei der gesamte Durchsatz an dem Wasserstoffgas mindestens 50 %, jedoch nicht mehr als 90 % der stöchiometrisch äquivalenten Menge beträgt, die für die vollständige Verbrennung des Wasserstoffgases und die vollständige Flammenhydrolyse der Silanverbindung erforderlich ist.

2. Verfahren zur Herstellung eines synthetischen Silicaglaskörpers, bei dem eine Silanverbindung der folgenden allgemeinen Formel:

$$R_nSi(OR)_{4-n}$$

worin R eine aliphatische monovalente Kohlenwasserstoffgruppe bedeutet und der Index n für 0 oder eine positive Zahl von nicht mehr als 4 steht,
in einer Knallgasflamme flammenhydrolysiert wird, die aus einer konzentrisch-mehrröhrigen Brennerdüse gebildet wird, die aus einer zentralen Düse und mindestens vier Ringdüsen besteht und eine die zentrale Düse umringende erste Ringdüse, eine die erste Ringdüse umringende zweite Ringdüse, eine die zweite Ringdüse umringende dritte Ringdüse und eine die dritte Ringdüse umringende vierte Ringdüse aufweist, in die Dampf aus der Silanverbindung, Sauerstoffgas und Wasserstoffgas eingeleitet werden, um eine Knallgasflamme zu bilden und die Flammenhydrolyse der Silanverbindung in der Knallgasflamme zu bewirken, wobei die Verbesserung umfaßt:

(a) Einleiten einer Gasmischung aus dem Dampf der Silanverbindung und Sauerstoff in die zentrale Düse,
(b) Einleiten des Sauerstoffgases in die erste und die dritten Ringdüsen und in die diskreten Röhrendüsen der Ringdüsen und
(c) Einleiten des Wasserstoffgases in die zweite, vierte und fünfte Ringdüsen,

wobei der gesamte Durchsatz an dem Wasserstoffgas mindestens 50 %, jedoch nicht mehr als 90 % der stöchiometrisch äquivalenten Menge beträgt, die für die vollständige Verbrennung des Wasserstoffgases und die vollständige Flammenhydrolyse der Silanverbindung erforderlich ist.

**Revendications**

1. Procédé pour la préparation d'un corps de verre de silice synthétique dans lequel un composé silane représenté par la formule générale:

$$R_nSi(OR)_{4-n},$$

dans laquelle R est un groupe hydrocarboné aliphatique monovalent et l'indice n vaut zéro ou est un nombre entier positif ne dépassant pas 4, est hydrolysé à la flamme dans une flamme oxhydrique formée sur une buse de brûleur à tubes multiples concentriques composée d'une buse centrale et d'au moins quatre buses annulaires comprenant une première buse annulaire entourant la buse centrale, une deuxième buse annulaire entourant la première buse annulaire, une troisième buse annulaire entourant la deuxième buse annulaire et une quatrième buse annulaire entourant la troisième buse annulaire, dans laquelle de la vapeur du composé silane, de l'oxygène et de l'hydrogène sont introduits pour former une flamme oxhydrique et pour effectuer l'hydrolyse à la flamme du composé silane dans la flamme oxhydrique, qui comprend un perfectionnement consistant:

(a) à introduire un mélange gazeux de vapeur du composé silane et d'oxygène dans la buse centrale;
(b) à introduire l'oxygène dans au moins deux buses annulaires incluant la première buse annulaire; et
(c) à introduire l'hydrogène gazeux dans au moins deux buses annulaires incluant la deuxième buse annulaire;

le débit total d'oxygène gazeux étant situé dans le domaine d'au moins 50%, mais sans dépasser 90%, de la quantité stoechiométriquement équivalente nécessaire pour la combustion complète de l'hydrogène et l'hydrolyse à la flamme complète du composé silane.

2. Procédé pour la préparation d'un corps en verre de silice synthétique dans lequel un composé silane représenté par la formule générale:

$$R_nSi(OR)_{4-n},$$

dans laquelle R est un groupe hydrocarboné aliphatique monovalent et l'indice n est zéro ou est un nombre entier positif ne dépassant pas 4, est hydrolysé à la flamme dans une flamme oxhydrique formée sur une buse de brûleur composite à tubes multiples globalement concentriques composée d'une buse centrale et de cinq buses annulaires incluant une première buse annulaire entourant la buse centrale, une deuxième buse annulaire entourant la première buse annulaire, une troisième buse annulaire entourant la deuxième buse annulaire, une quatrième buse annulaire entourant la troisième buse annulaire et une cinquième buse annulaire entourant la quatrième buse annulaire et une pluralité de buses tubulaires discrètes disposées concentriquement pour déboucher dans la cinquième buse annulaire, dans laquelle de la vapeur du composé silane, de l'oxygène et de l'hydrogène sont introduits pour former une flamme oxhydrique et pour effectuer l'hydrolyse à la flamme du composé silane dans la flamme oxhydrique, qui comprend un perfectionnement consistant:

(a) à introduire un mélange gazeux de vapeur du composé silane et d'oxygène dans la buse centrale;
(b) à introduire l'oxygène gazeux dans la première et la troisième buse annulaire et dans les buses tubulaires discrètes; et
(c) à introduire l'hydrogène gazeux dans la deuxième, la quatrième et la cinquième buse annulaire;

le débit total d'oxygène étant situé dans le domaine d'au moins 50%, mais sans dépasser 90%, de la quantité stoechiométriquement équivalente nécessaire pour la combustion complète de l'hydrogène et l'hydrolyse à la flamme complète du composé silane.

# FIG. 1

# FIG. 2

# FIG. 3